# FASCICULE DE BREVET EUROPEEN

(11) **EP 1 082 913 B1**
(45) Date de publication et mention de la délivrance du brevet: **15.08.2007**
(21) Numéro de dépôt: 00402464.2
(22) Date de dépôt: 07.09.2000
(51) Int. Cl.: A23N 15/00

(54) **Procédé et dispositif de traitement de végétaux après récolte**
Verfahren und Vorrichtung zur Behandlung von Pflanzgut nach der Ernte
Process and device for treating plants after harvesting

(30) Priorité: 10.09.1999 FR 9911715
(43) Date de publication de la demande: 14.03.2001
(73) Titulaire: Abc Metal Sarl, 80131 Harbonnieres (FR)
(72) Inventeur: Truffaux, Hubert, 80440 Boves (FR)
(74) Mandataire: Debay, Yves

(56) Documents cités:
- EP-A- 0 894 441
- WO-A-96/13180
- WO-A-97/13418
- FR-A- 2 309 160
- US-A- 3 930 994
- US-A- 5 495 797
- DATABASE WPI Section Ch, Week 198347 Derwent Publications Ltd., London, GB; Class D14, AN 1983-825908 XP002138860 & SU 993 909 A (MOSC AGRIC PROD ENG) 9 février 1983 (1983-02-09)

## Description

La présente invention concerne un procédé et un dispositif de traitement de végétaux après récolte. Le procédé et le dispositif selon l'invention permettent notamment la découpe et/ou l'extraction de portions de légumes, agrumes, fruits, tubercules. Le dispositif selon l'invention peut être mis en oeuvre sur une machine mobile de récolte de ces produits ou dans un atelier en poste fixe.

Le problème de la récolte et de la transformation des légumes, fruits et tubercules, est qu'il est difficile à automatiser sans endommager les végétaux du fait de leur fragilité. Ainsi, la transformation par exemple du brocoli, des choux-fleurs, ou des choux, en vue de leur conditionnement, est effectuée après la récolte sur un lieu de transformation, de façon manuelle par des opérateurs.

Il est connu par le document WO 96/13180 une machine d'enlèvement de portions de légumes comportant une tête de découpage mobile dotée d'une paire de lames incurvées. Un vérin actionne la rotation des lames qui se déplacent entre une position de découpage et une position de repos. Les légumes sont placés au préalable dans des récipients évasés montés sur la bande d'un convoyeur. Les déplacements respectifs du convoyeur et de la tête de découpage sont coordonnés. La tête de découpage montée au-dessus du convoyeur est déplacé alternativement d'avant en arrière entre une position basse de coupe extraction d'une portion du légume disposés dans le récipient et une position haute et avancée permettant d'envoyer une portion extraite en dehors du récipient et du convoyeur. Ce type de machine qui requiert des récipients sur un convoyeur et un dispositif à tête de découpage superposé au convoyeur permet un triage efficace mais possède une capacité de traitement restreinte qui en limite l'application.

La présente invention a donc pour objet de pallier les inconvénients de l'art antérieur en proposant dans un premier but un procédé automatisé de traitement des végétaux après récolte qui n'endommage pas les végétaux.

Ce but est atteint par le procédé de traitement de végétaux déterminés après récolte selon la revendication 1.

Des développements supplémentaires de l'invention sont décrits dans les revendications 2 à 5.

Un autre but de l'invention est de proposer une dispositif automatisé de traitement des végétaux après récolte qui n'endommage pas les végétaux

Ce but est atteint par le dispositif de traitement de végétaux déterminés après récolte selon la revendication 6.

Des développements supplémentaires de l'invention sont décrits dans les revendications 7 à 16.

D'autres particularités et avantages de la présente invention apparaîtront plus clairement à la lecture de la description ci-après faite en référence aux dessins annexés dans lesquels :
- la figure 1 représente une vue de dessus du dispositif selon l'invention,
- la figure 2 représente une vue de face de la station de découpe du dispositif selon l'invention,
- la figure 3 représente une vue de côté de la station de découpe du dispositif selon l'invention,
- les figures 4A et 4B représentent une vue de face, respectivement de côté, d'un exemple de réalisation d'un outil de découpe et/ou d'extraction en position ouverte,
- les figures 5A et 5B représentent une vue de face, respectivement de côté, d'un exemple de réalisation d'un outil de découpe et/ou d'extraction en cours de fermeture.

Comme expliqué précédemment, le dispositif selon l'invention est destiné à traiter des végétaux après leur récolte. Les végétaux déterminés susceptibles d'être traités par le dispositif selon l'invention sont, par exemple, des légumes, des fruits ou des tubercules tels qu'artichauts, asperges, betteraves, brocolis, carottes, céleris, champignons, choux, concombres, laitue, mâche, melons, navets, nectarines, oranges, pastèques, pêches, poires, pomelos, pommes, pommes de terre, romanesco, salades, tomates.

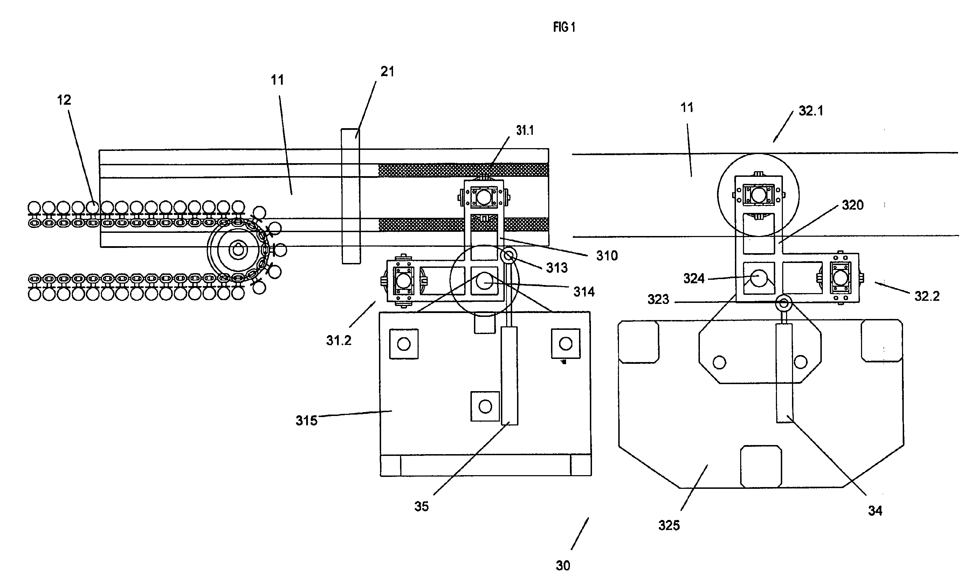

Le dispositif de traitement selon l'invention va à présent être décrit en référence aux figures 1 à 3. Le dispositif comprend des moyens (11, 12) d'approvisionnement et de convoyage, une station de traitement comportant des moyens (21) de détection disposés sur le trajet de convoyage des végétaux, et des moyens (30) mobiles de découpe et/ou d'extraction d'au moins une portion de chaque végétal. Ces moyens (30) de découpe et/ou d'extraction sont contrôlés par des moyens de commande (non représentés) qui reçoivent sur une entrée des informations transmises par les moyens (21) de détection et représentatives de la détection réalisée. L'actionnement des moyens (30) de découpe et/ou d'extraction est réalisé en fonction du traitement des informations reçues, effectué par les moyens de commande. La détection réalisée par les moyens (21) de détection peut consister à déterminer les dimensions et/ou la couleur et/ou la forme et/ou la position de chaque végétal convoyé. Le traitement effectué par les moyens de commande consiste à réaliser une comparaison entre les dimensions et/ou la couleur et/ou la forme et/ou la position de chaque végétal avec les dimensions et/ou la couleur et/ou la forme et/ou la position d'au moins un modèle de végétal de référence, préalablement mémorisé, et ainsi à déterminer quelles sont la ou les portions du végétal convoyé qui doivent être éventuellement découpées ou extraites.

Les moyens (11, 12) d'approvisionnement et de convoyage sont conformés pour délivrer les végétaux selon sensiblement une file et orientés selon une direction déterminée. Cette caractéristique permet d'obtenir un axe de découpe ou d'extraction sensiblement identique pour tous les végétaux et donc de limiter le déplacement des moyens (30) de découpe et d'extraction, ce qui, d'une part diminue la durée du cycle de découpe, et d'autre part réduit le coût de fabrication des moyens (30) de découpe et/ou d'extraction.

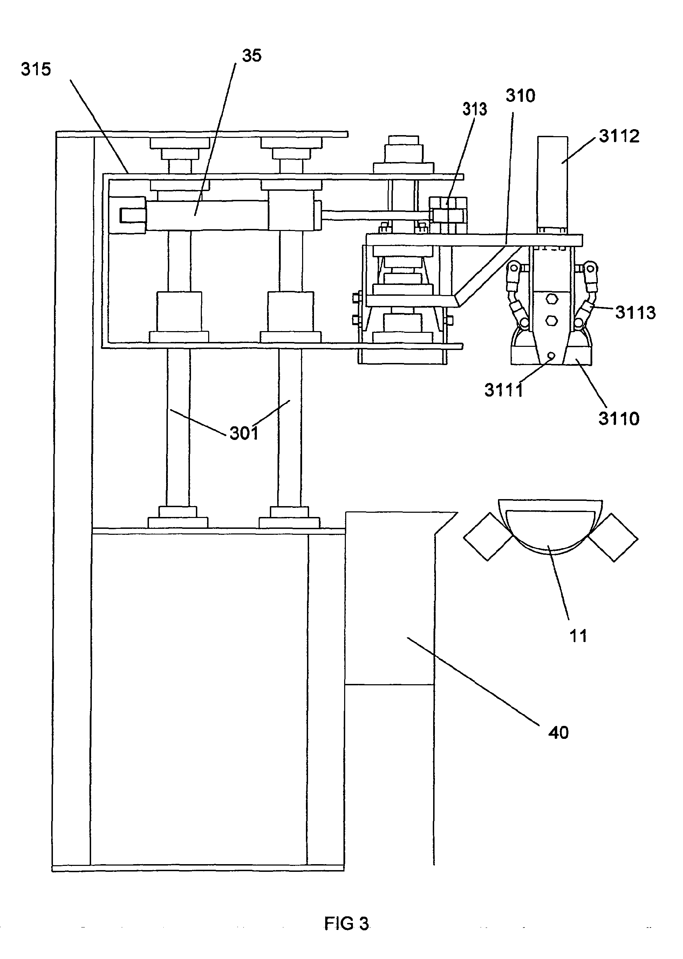

Le dispositif représenté aux figures 1 à 3 est conformé pour le traitement des légumes de type brocoli. Dans cette variante de réalisation, les moyens (11, 12) d'approvisionnement et de convoyage comprennent, par exemple, un premier convoyeur horizontal (11) à bandes. Les végétaux sont amenés selon sensiblement une file sur le premier convoyeur (11), par un deuxième convoyeur (12) conformé pour orienter les végétaux selon la direction souhaitée. Lorsque les végétaux, tels que les brocolis, sont de forme ovoïde, et afin que ceux-ci conservent l'orientation désirée pendant leur transfert sur le premier convoyeur (11), ce dernier peut former une goulotte telle que représentée en coupe sur la figure 3. Lorsque les végétaux sont des brocolis l'orientation préférée est celle où le tronc du brocoli est sensiblement vertical et dirigé vers le haut. Ainsi, les végétaux présentent toujours sensiblement le même profil lorsqu'ils entrent dans la station de traitement. De même, les végétaux présentent sensiblement toujours la même portion vers les moyens (30) de découpe et/ou d'extraction.

Les moyens (21) de détection comprennent, par exemple, des capteurs de type optique, mécanique ou électronique. Dans une variante de réalisation, les moyens (21) de détection comprennent une caméra connectée à un dispositif de traitement de l'image. Ainsi, dans le cas du brocoli, les moyens de détection permettent de déterminer, la hauteur et/ou la grosseur et/ou la couleur des brocolis convoyés. Ces informations sont ensuite transmises vers des moyens de commandes (non représentés). Ces moyens de commande comprennent, par exemple, un système informatique de traitement qui compare à l'aide d'un logiciel adapté, les informations produites et transmises par les moyens de détection et représentatives, par exemple, de la hauteur et/ou de la grosseur et/ou de la couleur des brocolis convoyés avec des informations représentatives d'un ou plusieurs modèles de brocolis. Ainsi, par exemple, en fonction de la grosseur et de la hauteur d'un brocoli, le système informatique détermine quelle(s) portion(s) ou quelle hauteur de tronc doit être découpée pour récupérer une quantité optimale de fleurettes du brocoli traité. Le système informatique peut également déterminer qu'un brocoli ne doit pas subir de traitement, par exemple, parce que sa forme et/ou sa hauteur et/ou sa couleur correspondent à celles d'un modèle prédéterminé de brocolis ou qu'elles répondent à des critères particuliers préalablement définis et mémorisés dans le système informatique. Dans ce cas, les moyens (30) mobiles de découpe et/ou d'extraction ne sont pas actionnés lorsque le brocoli sélectionné par le système informatique passe en dessous des moyens (30) de découpe. Le système informatique peut également comprendre une interface homme-machine permettant à un opérateur de saisir, par exemple, des paramètres particuliers de sélection des végétaux à traiter et, par exemple, un type de traitement particulier.

De même, les moyens de commande peuvent également contrôler les moyens (11, 12) d'approvisionnement et de convoyage, par exemple par l'intermédiaire d'une liaison de commande. Notamment, les moyens de commande peuvent modifier la vitesse de déplacement du convoyeur (11) horizontal pour adapter cette vitesse à la vitesse du traitement réalisé par les moyens (30) de découpe et/ou d'extraction. De plus, la liaison de commande permet aux moyens de commande de connaître précisément la vitesse de déplacement des végétaux sur le convoyeur (11) horizontal et donc de connaître précisément la durée du parcours entre les moyens de détection et des moyens (30) de découpe et/ou d'extraction et donc de déterminer par exemple, par un calcul, la position de chaque végétal. Ce calcul permet alors de déclencher le traitement d'un végétal avec un délai de retard après la détection. Ce délai correspond sensiblement à la durée du parcours entre les moyens de détection et les moyens (30) de découpe et/ou d'extraction. Enfin, le contrôle des moyens (11) de convoyage permet également d'anticiper le traitement des végétaux et donc d'optimiser la durée du cycle de traitement et d'avoir un approvisionnement et un convoyage des végétaux en continu.

Les moyens (30) de découpe et/ou d'extraction comprennent au moins un outil (31.1, 31.2, 32.1, 32.2) tranchant de découpe et/ou d'extraction. Chaque outil (31.1, 31.2, 32.1, 32.2) est monté sur un support (310, 320) mobile dans l'espace de la station de traitement, de sorte que la position de chaque outil (31.1, 31.2, 32.1, 32.2) soit modifiable au moins en hauteur, en fonction de la ou des portions du végétal à découper ou à extraire. Chaque outil (31.1, 31.2, 32.1, 32.2) de découpe et/ou d'extraction peut également être mobile entre deux positions, une première position dans laquelle l'outil (31.1, 31.2, 32.1, 32.2) de découpe et/ou d'extraction est apte à découper au moins une portion de végétal, et une deuxième position dans laquelle l'outil tranchant évacue la portion de végétal qu'il a découpée.

Selon la variante de réalisation représentée aux figures 1 à 3, les moyens (30) de découpe et/ou d'extraction comprennent, par exemple, deux paires d'outils (31.1, 31.2, 32.1, 32.2) d'extraction.

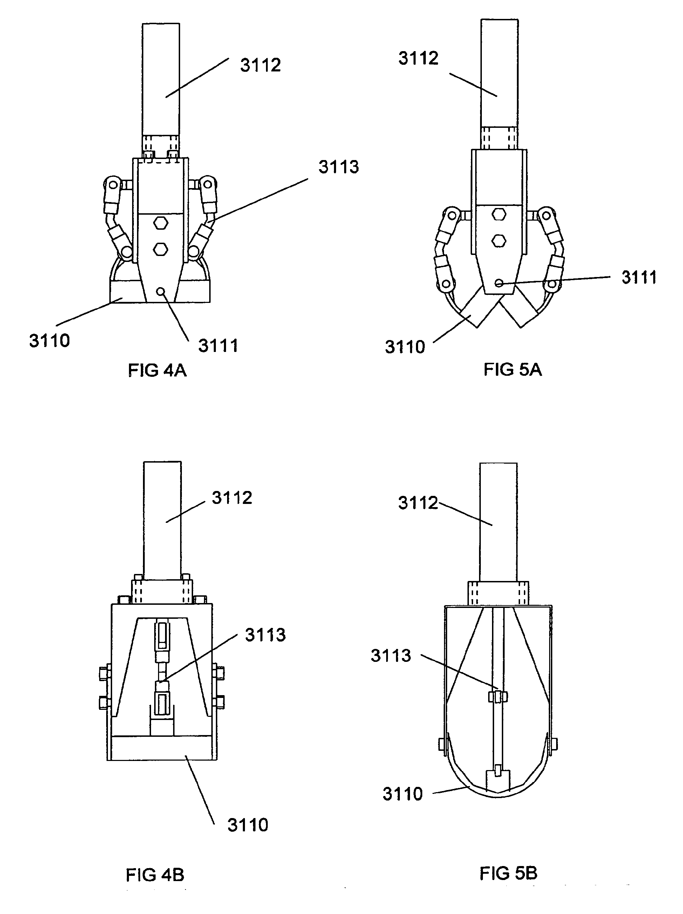

Les figures 4A, 4B, 5A, 5B représentent en détails un exemple de réalisation d'un outil de découpe et/ou d'extraction adapté pour traiter des brocolis. Chaque outil (31.1, 31.2, 32.1, 32.2) comprend deux mâchoires (3110) montées sur un axe (3111) fixe de pivotement et solidaires d'un système (3113) à genouillères. Le système (3113) à genouillères est animé d'un mouvement de translation vertical, par l'intermédiaire d'un vérin (3112) contrôlé par les moyens de commande. La mise en oeuvre du vérin (3112) provoque, soit la fermeture de l'outil par un pivotement des mâchoires (3110) sur leur axe (3111) avec, en fin de course, un effet de cisaillement obtenu par le chevauchement des mâchoires (3110) l'une sur l'autre, ce qui entraîne alors la découpe ou l'extraction d'une portion du végétal, soit l'ouverture des mâchoires (3110).

Selon les figures 1 à 3, pour pouvoir découper ou extraire une portion de végétal à des hauteurs différentes, le support (310, 320) de chaque paire d'outils (31.1, 31.2, 32.1, 32.2) est monté sur un châssis (315, 325) coulissant verticalement sur une pluralité de colonnes (301) de guidage, par exemple, par l'intermédiaire d'un vérin (non représenté). La mise en oeuvre est donc contrôlée par les moyens de commande. Ainsi, les moyens de commande actionnent ce vérin pour adapter la hauteur des outils (31.1, 31.2, 32.1, 32.2) de découpe et/ou d'extraction à la hauteur déterminée en fonction de l'analyse par le système informatique de traitement, des informations représentatives de la détection.

Dans une autre variante (non représentée) chaque outil (31.1, 31.2, 32.1, 32.2) peut être animé individuellement du mouvement de translation vertical.

Selon la variante de réalisation représentée aux figures 1 à 3, chaque support (310, 320) est compris dans un plan horizontal et a sensiblement la forme d'un L et les outils (31.1, 31.2, 32.1, 32.2) de chaque support (310, 320) sont montés à l'extrémité libre de chaque branche du L. Chaque support (310, 320) est également monté pivotant sur le châssis (315, 325), l'axe de pivotement (311, 312) étant confondu avec la jonction des branches du L formant le support (310, 320). Le mouvement de pivotement est obtenu par l'intermédiaire d'un deuxième vérin (34, 35) solidaire du châssis (315, 325) et monté sur une branche du L formant le support (310, 320), de façon décalée par rapport à l'axe de pivotement (314, 324). Le montage du deuxième vérin (34, 35) sur le support (310, 320) est réalisé, par exemple, par une liaison (313, 323) de type pivot, pour autoriser le mouvement du deuxième vérin (34, 35) par rapport au support (310, 320). La mise en oeuvre du deuxième vérin (34, 35) provoque le pivotement selon un angle de 90° du support (310, 320). Ce pivotement permet le travail en alternance des outils (31.1, 31.2, 32.1, 32.2) d'un support (310, 320).

En effet, lorsqu'un des outils (31.1, 31.2, 32.1, 32.2) d'un support (310, 320) est en position de traitement, c'est-à-dire qu'il est prêt ou en train de découper ou d'extraire une portion d'un végétal, l'autre outil (31.1, 31.2, 32.1, 32.2) du même support (310, 320) éjecte la portion découpée ou extraite, par exemple dans une trémie (40) de récupération. Ainsi, une partie du traitement d'un végétal est réalisée en temps masqué, ce qui réduit sensiblement la durée d'un cycle de traitement d'un végétal.

Après le traitement, les végétaux peuvent être convoyés, par exemple par le convoyeur (11) horizontal, ou par une succession de convoyeurs, vers une station de triage (non représenté). Cette station comprend, par exemple, des moyens de sélection, tels que des doigts de manutention, et des moyens de stockage. Le triage peut être commandé par le système informatique des moyens de commande. En effet, le système informatique reçoit les informations représentatives de la hauteur et/ou la grosseur et/ou la couleur de chaque végétal à traiter. Ainsi, en fonction du traitement réalisé, le système informatique détermine la catégorie dans laquelle doit être stocké le végétal traité. Une fois cette catégorie déterminée, les moyens de sélection sont alors actionnés par les moyens de commande, pour convoyer le végétal traité vers les moyens de stockage correspondant à la catégorie déterminée par les moyens de commande.

Dans une autre variante de réalisation, la station de triage est autonome, c'est-à-dire qu'elle comprend ces propres moyens de détection et de traitement des informations représentatives de la détection, pour déterminer la catégorie d'un végétal traité et ensuite actionner des moyens de sélection, pour convoyer le végétal traité vers des moyens de stockage correspondant à la catégorie déterminée par les moyens de détection et de traitement.

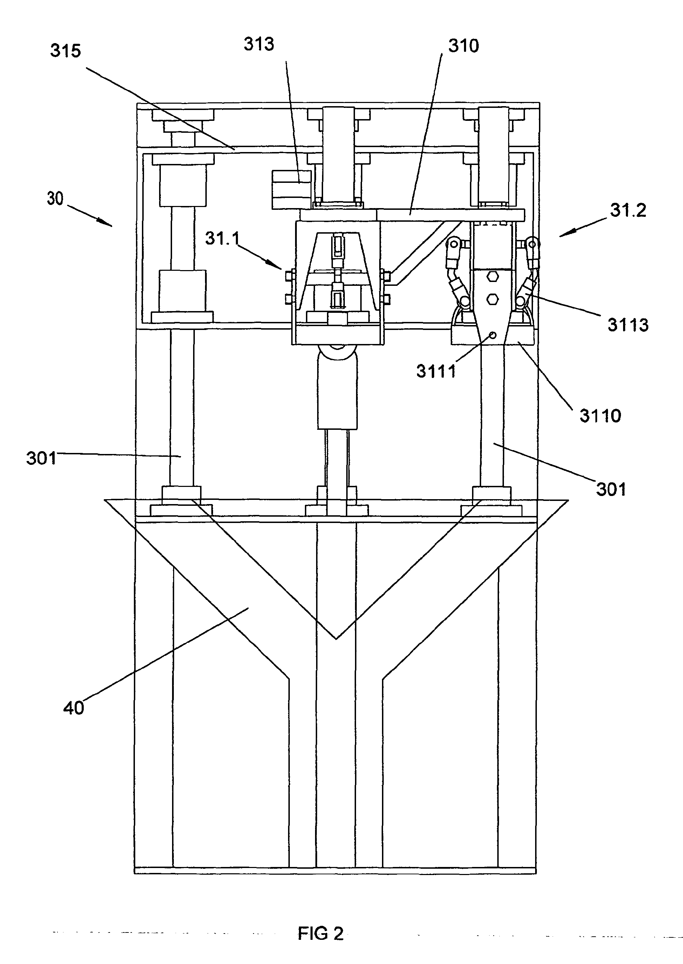

Après le triage, les végétaux traités peuvent être conditionnés ou utilisés dans la fabrication de produits ou sous-produits. De même, les portions de végétaux résultant de la découpe et déversées dans la trémie (40, fig. 2 et 3) de récupération peuvent également être stockées dans des moyens de stockage pour être ensuite conditionnées ou utilisées dans la fabrication de produits et sous-produits

La présente description correspond à une application au traitement des brocolis et notamment à la séparation des fleurettes de brocolis. Cependant, le dispositif décrit précédemment peut être adapté pour traiter d'autres végétaux. Il suffit pour cela de modifier les moyens (11, 12) d'approvisionnement et de convoyage pour orienter le végétal selon la direction souhaitée, ainsi que les outils de découpe et/ou d'extraction pour obtenir le traitement voulu. De même, il est nécessaire de modifier ou de paramétrer le logiciel de traitement et d'analyse des informations représentatives de la détection de façon à adapter la mise en oeuvre des outils de découpes et/ou d'extraction en fonction des végétaux et du traitement voulu.

Ainsi, le procédé de traitement de végétaux déterminés après récolte se caractérise en ce qu'il comprend :
- une étape d'approvisionnement et de convoyage des végétaux selon une file, de sorte que chaque végétal soit orienté selon une direction déterminée,
- une étape de détection et d'analyse de chaque végétal,
- une étape de traitement de chaque végétal en fonction de l'analyse du végétal, cette étape de traitement consistant en au moins une découpe ou extraction d'au moins une portion déterminée du végétal à l'aide d'au moins un outil comportant deux mâchoires.

Selon une autre particularité, l'étape de détection et d'analyse comprend une détection des dimensions et/ou de la couleur et/ou de la forme et/ou de la position de chaque végétal.

Selon une autre particularité, l'étape de détection et d'analyse comprend une analyse entre les informations représentatives de la détection et des modèles de végétaux de références mémorisés.

Selon une autre particularité, l'étape de traitement consiste à neutraliser la ou les découpes ou extractions d'au moins une portion du produit pour conserver le végétal entier.

Selon une autre particularité, le procédé de traitement comprend :
- une étape de triage des portions de végétaux ou des végétaux entiers, en vue de leur conditionnement et/ou de leur récupération pour la fabrication de sous-produits alimentaire.

De même, le dispositif de traitement de végétaux déterminés après récolte, se caractérise en ce qu'il comprend, d'une part des moyens (12) d'approvisionnement sur des moyens (11) de convoyage conformés pour orienter les végétaux selon une direction déterminée et selon une file, et d'autre part des moyens (21) de détection disposés sur le trajet de convoyage des végétaux et connectés à des moyens de commande qui reçoivent les informations représentatives de la détection effectuées par les moyens (21) de détection, les moyens de commandes contrôlant le déplacement et l'actionnement de moyens (30) mobiles de découpe et/ou d'extraction disposés en aval des moyens (21) de détection en fonction du traitement des informations reçues, les moyens (30) mobiles de découpe et/ou d'extraction comprenant au moins un outil (31.1, 31.2, 32.1, 32.2) tranchant comportant deux mâchoires mobiles.

Selon une autre particularité, les moyens de commande contrôlent et déterminent la vitesse de déplacement des végétaux par l'intermédiaire d'une liaison de commande reliée aux moyens de convoyage (11), pour calculer la position dans laquelle les moyens (31.1, 31.2, 32.1, 32.2) de découpe et/ou d'extraction doivent opérer.

Selon une autre particularité, les moyens (21) de détection comprennent un système optique et/ou mécanique et/ou électronique permettant de déterminer les dimensions et/ou la couleur et/ou la forme et/ou la position de chaque végétal.

Selon une autre particularité, les moyens de commande comprennent un système informatique de traitement déterminant, à partir d'une comparaison entre les informations représentatives de la détection et des modèles de végétaux de références et/ou du traitement mécanique à effectuer, la ou les zones du végétal devant être coupées ou extraites.

Selon une autre particularité, les mâchoires (3110) des moyens (30) de découpe et/ou d'extraction sont actionnés par un vérin (3112) contrôlé par les moyens de commande

Selon une autre particularité, les moyens (30) mobiles de découpe et/ou d'extraction sont montés sur un châssis (315, 325) animé d'un mouvement de translation selon l'axe vertical.

Selon une autre particularité, le dispositif de traitement de végétaux après récolte comprend des moyens de convoyage (11) et de stockage de chacune des portions de végétaux en vue de leur conditionnement ou de leur utilisation dans la fabrication de sous-produits.

Selon une autre particularité, le dispositif de traitement de végétaux après récolte comprend des moyens de triage des portions de végétaux contrôlés par les moyens de commande.

Selon une autre particularité, les végétaux sont des légumes, des fruits ou des tubercules tels qu'artichauts, asperges, betteraves, brocolis, carottes, céleris, champignons, choux, concombres, laitue, mâche, melons, navets, nectarines, oranges, pastèques, pêches, poires, pomelos, pommes, pommes de terre, romanesco, salades, tomates.

Selon une autre particularité, chaque outil (31.1, 31.2, 32.1, 32.2) tranchant est mobile entre deux positions, une première position dans laquelle l'outil de découpe est apte à découper au moins une portion de végétal, et une deuxième position dans laquelle l'outil tranchant évacue la portion de végétal qu'il a découpée.

Selon une autre particularité, une pluralité d'outils (31.1, 31.2, 32.1, 32.2) est montée sur un support (310, 320) de sorte que chaque outil (31.1, 31.2, 32.1, 32.2) se déplace entre la première et la deuxième position.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration mais peuvent être modifiés dans le domaine défini par la portée des revendications jointes.

## Revendications

1. Procédé de traitement de végétaux déterminés après récolte comprenant :
- une étape d'approvisionnement et de convoyage des végétaux utilisant un convoyeur (11) pour transférer les végétaux vers des moyens de traitement,
- une étape de détection et d'analyse de chaque végétal,
- une étape de traitement de chaque végétal en fonction de l'analyse du végétal,
**caractérisé en ce qu'**il comporte lors de l'étape d'approvisionnement et de convoyage, l'utilisation de moyens d'approvisionnement (12) pour amener les végétaux selon une file sur le convoyeur (11), chaque végétal étant orienté selon une direction déterminée par des moyens d'orientation des moyens d'approvisionnement (12) et **en ce que** l'étape de traitement consiste en au moins une découpe ou extraction d'au moins une portion déterminée du végétal disposé sur le convoyeur (11), à l'aide d'au moins un outil (31.1, 31.2, 32.1, 32.2) comportant deux mâchoires (3110) et monté sur un support (310, 320) pivotant autour d'un axe vertical (314, 324).

2. Procédé de traitement de végétaux après récolte selon la revendication 1, **caractérisé en ce que** l'étape de détection et d'analyse comprend une détection des dimensions et/ou de la couleur et/ou de la forme et/ou de la position de chaque végétal.

3. Procédé de traitement de végétaux après récolte selon la revendication 1 ou 2, **caractérisé en ce que** l'étape de détection et d'analyse comprend une analyse entre les informations représentatives de la détection et des modèles de végétaux de références mémorisés.

4. Procédé de traitement de végétaux après récolte selon la revendication 1, **caractérisé en ce que** l'étape de traitement consiste à neutraliser la ou les découpes ou extractions d'au moins une portion du produit pour conserver le végétal entier.

5. Procédé de traitement de végétaux après récolte selon la revendication 1, **caractérisé en ce qu'**il comprend après l'étape de traitement une étape de triage des portions de végétaux ou des végétaux entiers convoyés, en vue de leur conditionnement et/ou de leur récupération pour la fabrication de sous-produits alimentaire.

6. Dispositif de traitement de végétaux déterminés après récolte, comprenant, d'une part des moyens d'approvisionnement et de convoyage des végétaux, et d'autre part des moyens (21) de détection disposés sur le trajet de convoyage des végétaux et connectés à des moyens de commande qui reçoivent les informations représentatives de la détection effectuées par les moyens (21) de détection, les moyens de commande contrôlant le déplacement et l'actionnement de moyens (30) mobiles de découpe et/ou d'extraction disposés en aval des moyens (21) de détection en fonction du traitement des informations reçues, les moyens (30) mobiles de découpe et/ou d'extraction comprenant au moins un outil (31.1, 31.2, 32.1, 32.2) tranchant comportant deux mâchoires mobiles, **caractérisé en ce que** les moyens d'approvisionnement et de convoyage comportent un convoyeur (11) associé à des moyens (12) d'approvisionnement conformés pour orienter les végétaux amenés sur le convoyeur selon une direction déterminée et selon une file, l'outil (31.1, 31.2, 32.1, 32.2) tranchant étant monté sur un support (310, 320) pivotant autour d'un axe vertical (314, 324).

7. Dispositif de traitement de végétaux après récolte selon la revendication 6, **caractérisé en ce que** les moyens de commande contrôlent et déterminent la vitesse de déplacement des végétaux par l'intermédiaire d'une liaison de commande reliée aux moyens de convoyage (11), pour calculer la position dans laquelle les moyens (31.1, 31.2, 32.1, 32.2) de découpe et/ou d'extraction doivent opérer.

8. Dispositif de traitement de végétaux après récolte selon la revendication 6 ou 7, **caractérisé en ce que** les moyens (21) de détection comprennent un système optique et/ou mécanique et/ou électronique permettant de déterminer les dimensions et/ou la couleur et/ou la forme et/ou la position de chaque végétal.

9. Dispositif de traitement de végétaux après récolte selon l'une des revendications 6 à 8, **caractérisé en ce que** les moyens de commande comprennent un système informatique de traitement déterminant, à partir d'une comparaison entre les informations représentatives de la détection et des modèles de végétaux de références et/ou du traitement mécanique à effectuer, la ou les zones du végétal devant être coupées ou extraites.

10. Dispositif de traitement de végétaux après récolte selon l'une des revendications 6 à 9, **caractérisé en ce que** les mâchoires (3110) des moyens (30) de découpe et/ou d'extraction sont actionnés par un vérin (3112) contrôlé par les moyens de commande.

11. Dispositif de traitement de végétaux après récolte selon l'une des revendications 6 à 10, **caractérisé en ce que** les moyens (30) mobiles de découpe et/ou d'extraction sont montés sur un châssis (315, 325) animé d'un mouvement de translation selon un axe vertical.

12. Dispositif de traitement de végétaux après récolte selon l'une des revendications 6 à 10, **caractérisé en ce qu'**il comprend des moyens de convoyage (11) et de stockage de chacune des portions de végétaux en vue de leur conditionnement ou de leur utilisation dans la fabrication de sous-produits.

13. Dispositif de traitement de végétaux après récolte selon l'une des revendications 6 à 10, **caractérisé en ce qu'**il comprend des moyens de triage des portions de végétaux contrôlés par les moyens de commande.

14. Dispositif de traitement de végétaux après récolte selon la revendication 9, **caractérisé en ce que** les modèles de végétaux de références à la disposition du système informatique de traitement sont adaptés pour permettre au dispositif de traiter des légumes, des fruits ou des tubercules tels qu'artichauts, asperges, betteraves, brocolis, carottes, céleris, champignons, choux, concombres, laitue, mâche, melons, navets, nectarines, oranges, pastèques, pêches, poires, pomelos, pommes, pommes de terre, romanesco, salades, tomates.

15. Dispositif de traitement de végétaux après récolte selon l'une des revendications 10 à 11, **caractérisé en ce que** chaque outil (31.1, 31.2, 32.1, 32.2) tranchant est rendu mobile, via l'articulation du support (310, 320) autour de l'axe vertical (314, 324) de pivotement, entre deux positions, une première position dans laquelle l'outil de découpe est apte à découper au moins une portion de végétal, et une deuxième position dans laquelle l'outil tranchant évacue la portion de végétal qu'il a découpée.

16. Dispositif de traitement de végétaux après récolte selon la revendication 15, **caractérisé en ce qu'**une pluralité d'outils (31.1, 31.2, 32.1, 32.2) est montée sur un support (310, 320) de sorte que chaque outil (31.1, 31.2, 32.1, 32.2) se déplace entre la première et la deuxième position.

## Claims

1. Processing method for certain post-harvest produce comprising:
- a step for supplying and conveying produce, using a conveyor (11) to transfer produce to processing means,
- a step for detecting and analysing each produce item,
- a step for processing each produce item depending on the analysis thereof,
**characterised in that** it comprises, during the step for supplying and conveying, the use of supply means (12) in order to convey the produce by following along a line on the conveyor (11), each produce item having been oriented towards a direction determined by the orientation means of the supply means (12) and **in that** the step for processing consists of at least one cutting out or extraction of at least a certain part of the produce item situated on the conveyor (11), using at least one tool (31.1, 31.2, 32.1, 32.2) that comprises two grippers (3110) and is mounted on a support (310, 320) pivoting around a vertical axis (314, 324).

2. Processing method for post-harvest produce according to claim 1, **characterised in that** the step for detecting and analysing comprises detection of the dimensions and/or the colour and/or the shape and/or the position of each produce item.

3. Processing method for post-harvest produce according to claim 1 or 2, **characterised in that** the step for detecting and analysing comprises an analysis between the information resulting from the detection and the stored data regarding the produce reference models.

4. Processing method for post-harvest produce according to claim 1, **characterised in that** the step for processing consists of preventing any cutting out or extracting of at least a part of the product so as to keep the produce item whole.

5. Processing method for post-harvest produce according to claim 1, **characterised in that** the step for processing is followed by a step for sorting parts of produce items or whole produce items that are being conveyed for the sake of packaging and/or recuperating them for manufacturing secondary food products.

6. Processing device for certain post-harvest produce, comprising means for supplying and conveying produce, as well as detection means (21) which are installed on the path conveying produce and are connected to control means which receive the information resulting from the detection made by the detection means (21), the means for controlling the movement and triggering the movable cutting out and/or extraction means (30) positioned downstream from the detection means in relation to the processing of the information received, the movable cutting out and/or extraction means (30) comprising at least one edge tool (31.1, 31.2, 32.1, 32.2) comprising two movable grippers, **characterised in that** the supply and conveying means comprise a conveyer (11) associated with the supply means (12) designed to orientate the produce items brought onto the conveyor according to a determined direction or by following along a line, the edge tool (31.1, 31.2, 32.1, 32.2) having been mounted on a support (310, 320) pivoting around a vertical axis (314, 324).

7. Processing device for post-harvest produce according to claim 6, **characterised in that** the control means controls and determines the speed at which the produce is moved by means of a control link connected to the conveying means (11), in order to calculate the position at which the cutting out and/or extraction means (31.1, 31.2, 32.1, 32.2) must operate.

8. Processing device for post-harvest produce according to claim 6 or 7, **characterised in that** the detection means (21) comprises an optical system and/or mechanical system and/or an electronic system for determining the dimensions and/or the colour and/or the shape and/or the dimensions and/or the position of each produce item.

9. Processing device for post-harvest produce according to one of claims 6 to 8, **characterised in that** the control means comprise a computer processing system which, by comparing the information resulting from the detection with the produce reference models and/or with the mechanical processing to be carried out, determines the area or areas of the produce item that must be cut out or extracted.

10. Processing device for post-harvest produce according to one claims 6 to 9, **characterised in that** the grippers (3110) of the cutting out and/or extraction means (30) are triggered by an actuator (31.12) controlled by the control means.

11. Processing device for post-harvest produce according to one of claims 6 to 10, **characterised in that** the movable cutting out and/or extraction means (30) are mounted on a frame (315, 325) making a linear movement along a vertical axis.

12. Processing device for post-harvest produce according to one of claims 6 to 10, **characterised in that** it comprises conveying and storage means (11) for each one of the parts of produce items for the intent of packaging or use thereof in the manufacturing of secondary food products.

13. Processing device for post-harvest produce according to one of claims 6 to 10, **characterised in that** it comprises means for sorting parts of produce items, controlled by the control means.

14. Processing device for post-harvest produce according to claim 9, **characterised in that** the produce reference models used by the computer processing system are adapted such that they enable the device to process vegetables, fruits and tubers such as apples, artichokes, asparagus, beets, broccoflower, broccoli, cabbage, carrots, celery, cucumbers, grapefruits, lamb's lettuce, lettuce, melons, mushrooms, nectarines, oranges, peaches, pears, potatoes, salad greens, tomatoes, turnips and watermelons.

15. Processing device for post-harvest produce according to one of claims 10 to 11, **characterised in that** each edge tool (31.1, 31.2, 32.1, 32.2) is capable of moving, via the articulation of the support (310, 320) around the vertical pivoting axis (314, 324), between two positions: a first position in which the cutting out tool is capable of cutting out at least part of a produce item and a second position in which the edge tool evacuates the part cut out of the produce item.

16. Processing device for post-harvest produce according to claim 15, **characterised in that** a plurality of tools (31.1, 31.2, 32.1, 32.2) is mounted on a support (310, 320) such that each tool (31.1, 31.2, 32.1, 32.2) moves between the first position and the second position.

## Patentansprüche

1. Verfahren zur Behandlung bestimmter Pflanzenteile nach der Ernte, umfassend:
- einen Schritt der Zuführung und der Forderung der Pflanzenteile unter Verwendung eines Förderers (11) zum Transport der Pflanzenteile zu Verarbeitungsmitteln,
- einen Schritt der Feststellung und Analyse jedes Pflanzenteils.
- einen Schritt der Behandlung jedes Pflanzenteils in Abhängigkeit von der Analyse des Pflanzenteils,
- **dadurch gekennzeichnet, dass** es im Schritt der Zuführung und Förderung die Verwendung von Zuführungsmitteln (12) umfasst, um die Pflanzenteile in einer Reihe In den Förderer (11) zu bringen, wobei jedes Pflanzenteil durch Ausrichtungsmittel der Zuführungsmittel (12) in eine bestimmte Richtung gedreht wird und **dadurch**, dass der Verarbeitungsschritt aus mindestens einem Ausschneiden oder Entnehmen mindestens eines bestimmten Stückes der Pflanze, die auf dem Förderer (11) angeordnet ist, mit Hilfe mindestens eines Werkzeugs (31.1, 31.2, 32.1, 32.2) besteht, das zwei Backen (3110) aufweist und auf einem Halter (310, 320) um eine vertikale Achse (314, 324) schwenkend montiert ist.

2. Verfahren zur Behandlung bestimmter Pflanzenteile nach der Ernte nach Patentanspruch 1, **dadurch gekennzeichnet, dass** der Feststellungs- und Analyseschritt eine Feststellung der Abmessungen und/oder der Farbe und/oder der Form und/oder der Stellung jedes Pflanzenteils umfasst.

3. Verfahren zur Behandlung bestimmter Pflanzenteile nach der Ernte nach Patentanspruch 1 oder 2, **dadurch gekennzeichnet, dass** der Feststellungs- und Analyseschritt eine Analyse aufgrund der Informationen, die die Feststellung beschreiben, und gespeicherter Bezugsmodelle der Pflanzenteile umfasst.

4. Verfahren zur Behandlung bestimmter Pflanzenteile nach der Ernte nach Patentanspruch 1, **dadurch gekennzeichnet, dass** der Verarbeitungsschritt darin besteht, den oder die Ausschnitt(e) oder Entnahme(n) mindestens eines Stückes des Produktes unschädlich zu machen, um das ganze Pflanzenteil zu konservieren.

5. Verfahren zur Behandlung bestimmter Pflanzenteile nach der Ernte nach Patentanspruch 1, **dadurch gekennzeichnet, dass** es nach dem Verarbeitungsschritt einen Schritt der Auslese der geförderten Pflanzenteile oder ganzen Pflanzen zu ihrer Verpackung und/oder ihrer Gewinnung für die Herstellung von Nahrungsmittelnebenprodukten umfasst.

6. Vorrichtung zur Behandlung bestimmter Pflanzenteile nach der Ernte, umfassend: einerseits Mittel zur Zuführung und Förderung der Pflanzenteile und andererseits Feststellungsmittel (21), die an der Förderstrecke der Pflanzenteile angeordnet und an Steuermittel angeschlossen sind, die die Informationen über die von den Feststellungsmitteln (21) ausgeführte Feststellung empfangen, wobei die Steuermittel die Bewegung und Betätigung hinter den Feststellungsmitteln (21) angeordneter, beweglicher Ausschneide- und/oder Entnahmemittel in Abhängigkeit von der Behandlung der empfangenen Informationen steuern, wobei die beweglichen Ausschneide- und/oder Entnahmemittel mindestens ein schneidendes Werkzeug (31.1, 31.2, 32.1, 32.2) umfassen, das zwei bewegliche Backen aufweist, **dadurch gekennzeichnet, dass** die Zuführungs- und Fördermittel einen Förderer (11) umfassen, der mit Zuführungsmitteln (12) verbunden ist, die dafür ausgebildet sind, die auf den Förderer gebrachten Pflanzenteile in eine bestimmte Richtung und in einer Reihe auszurichten, wobei das schneidende Werkzeug (31.1, 31.2, 32.1, 33.2) auf einem Halter (310, 320) montiert ist, der um eine- vertikale Achse (314, 324) schwenkt.

7. Vorrichtung zur Behandlung von Pflanzenteilen nach der Ernte nach Patentanspruch 6, **dadurch gekennzeichnet, dass** die Steuermittel die Geschwindigkeit der Bewegung der Pflanzenteile über eine Steuerverbindung steuern und bestimmen, die an die Fördermittel (11) angeschlossen ist, um die Stellung zu berechnen, in der die Ausschneide- und/oder Entnahmemittel (31.1, 31.2, 32.1, 32.2) arbeiten müssen.

8. Vorrichtung zur Behandlung von Pflanzenteilen nach der Ernte nach Patentanspruch 6 oder 7, **dadurch gekennzeichnet, dass** die Feststellungsmittel (21) ein optisches und/oder mechanisches und/oder elektronisches System umfassen, das erlaubt, die Abmessungen und/oder die Farbe und/oder die Form und/oder die Stellung jedes Pflanzenteils zu bestimmen.

9. Vorrichtung zur Behandlung von Pflanzenteilen nach der Ernte nach einem der Patentansprüche 6 bis 8, **dadurch gekennzeichnet, dass** die Steuermittel ein Datenverarbeitungsmittel umfassen, das aufgrund eines Vergleichs der Informationen, die die Feststellung beschreiben, mit gespeicherten Bezugsmodelien der Pflanzenteile und/oder der auszuführenden mechanischen Behandlung den oder die Bereich(e) des Pflanzenteils bestimmt, der ausgeschnitten oder entnommen werden muss.

10. Vorrichtung zur Behandlung von Pflanzenteilen nach der Ernte nach einem der Patentansprüche 6 bis 8, **dadurch gekennzeichnet, dass** die Becken (3110) der Ausschneide- und/oder Entnahmemittel (30) durch einen Stellantrieb (3112) betätigt werden, der durch die Steuermittel gesteuert wird.

11. Vorrichtung zur Behandlung von Pflanzenteilen nach der Ernte nach einem der Patentansprüche 6 bis 10, **dadurch gekennzeichnet, dass** die beweglichen Ausschneide- und/oder Entnahmemittel (30) auf einem Chassis (315, 325) montiert sind, das eine Verschiebungsbewegung längs einer vertikalen Achse ausführt.

12. Vorrichtung zur Behandlung von Pflanzenteilen nach der Ernte nach einem der Patentanspruche 6 bis 10, **dadurch gekennzeichnet, dass** es Förder- (11) und Lagerungsmittel für jedes der Pflanzenteile für deren Verpackung oder Verwendung in der Herstellung von Nebenprodukten umfasst.

13. Vorrichtung zur Behandlung von Pflanzenteilen nach der Ernte nach einem der Patentansprüche 6 bis 10, **dadurch gekennzeichnet, dass** es Mittel zur Auslese der Pflanzenteile umfasst, die von den Steuermitteln gesteuert werden.

14. Vorrichtung zur Behandlung von Pflanzenteilen nach der Ernte nach Patentanspruch 9, **dadurch gekennzeichnet, dass** die Bezugsmodelle der Pflanzenteile, die dem Datenverarbeitungssystem zur VerfOgung stehen, dafür eingerichtet sind, der Vorrichtung zu erlauben, Gemüse, Früchte oder Knollen zu verarbeiten, wie etwa Artischocken. Spargel, Rüben, Broccoli, Karotten, Sellerie, Pilze, Kohl, Gurken, Kopfsalat, Feldsalat, Melonen, weiße Rüben, Nektarinen, Orangen, Wassermelonen, Pfirsiche, Birnen, Pampelmusen, Apfel, Kartoffeln. Romanesco, Salate, Tomaten.

15. Vorrichtung zur Behandlung von Pflanzenteilen nach der Ernte nach einem der Patentansprüche 10 bis 11, **dadurch gekennzeichnet, dass** jedes schneidende Werkzeug (31.1, 31.2, 32.1, 32.2) durch ein Gelenk des Halters (310, 320) um eine vertikale Schwenkachse (314, 324) zwischen zwei Stellungen bewegbar ist, einer ersten Stellung, in der das Ausschneidewerkzeug in der Lage ist, mindestens ein Stock der Pflanze auszuschneiden und einer zweiten Stellung, In der das schneidende Werkzeug das StOck der Planze, das es ausgeschnitten hat, entfernt.

16. Vorrichtung zur Behandlung von Pflanzenteilen nach der Ernte nach Patentanspruch 15, **dadurch gekennzeichnet, dass** mehrere Werkzeuge (31.1, 31.2, 32.1, 32.2) auf einem Halter (310, 320) montiert sind, derart dass sich jedes Werkzeug (31.1, 31.2, 32.1, 1, 32.2) zwischen einer ersten und einer zweiten Stellung bewegt.
